# EUROPÄISCHE PATENTSCHRIFT

(11) **EP 3 456 945 B1**
(45) Veröffentlichungstag und Bekanntmachung des Hinweises auf die Patenterteilung: **04.11.2020**
(21) Anmeldenummer: 18193554.5
(22) Anmeldetag: 10.09.2018
(51) Int. Cl.: F02C 7/36, F16H 57/08, F16H 57/04

(54) **GETRIEBE MIT EINEM ÖLVERTEILUNGSSYSTEM**
TRANSMISSION WITH AN OIL DISTRIBUTION SYSTEM
ENGRENAGE DOTÉ D'UN SYSTÈME DE DISTRIBUTION D'HUILE

(30) Priorität: 19.09.2017 DE 102017121739
(43) Veröffentlichungstag der Anmeldung: 20.03.2019
(73) Patentinhaber: Rolls-Royce Deutschland Ltd & Co KG, 15827 Blankenfelde-Mahlow (DE)
(72) Erfinder: Dr. Uhkötter, Stephan, 15827 Blankenfelde-Mahlow (DE); Kracht, Uwe, 15827 Blankenfelde-Mahlow (DE); Klostermann, Jens, 15827 Blankenfelde-Mahlow (DE)
(74) Vertreter: Schmidt, Martin Michael

(56) Entgegenhaltungen:
- EP-A1- 2 570 700
- EP-A2- 0 738 843
- WO-A1-2017/046481
- DE-A1- 10 217 483

## Beschreibung

Die Erfindung betrifft ein Getriebe mit einem Ölverteilungssystem.

Aus der US 2016/0377167 A1 ist ein Getriebe eines Strahltriebwerks bekannt. Das Getriebe umfasst ein Sonnenrad, ein gehäusefestes Hohlrad und einen drehbaren Planetenträger, über den ein Bläser antreibbar ist. Mehrere Planetenräder stehen in Eingriff mit dem Sonnenrad und dem Hohlrad. Über eine mit dem Planetenträger des Getriebes verbundene Auffangrinne wird Öl in Richtung der Zahneingriffe zwischen den Planetenrädern und dem Hohlrad geführt. Die Auffangrinne erstreckt sich in Umfangsrichtung des Planetenträgers und ist radial innen offen ausgeführt. Über die radial innenliegende Öffnung wird Öl über eine Zuführung eingeleitet.

Das in die Auffangrinne eingeleitete Öl wird jedoch nachteilhafterweise nicht in einem zur Weiterleitung in Richtung der Planetenradlager erforderlichen Umfang innerhalb der Auffangrinne beschleunigt. Dadurch besteht die Gefahr einer Unterversorgung der Planetenradlager sowie im Bereich der Zahneingriffe zwischen den Bauteilen des Getriebes. Dies resultiert unter anderem aus der Tatsache, dass die Wandreibung zwischen der Auffangrinne und dem in die Auffangrinne eingeleiteten Öl nicht ausreichend ist, um das Öl innerhalb der Auffangrinne in radialer Richtung in Richtung der Planetenradlager zu beschleunigen.

Aus der WO 2017/046481 A1 und aus der EP 0 738 843 A2 ist jeweils ein Ölverteilungssystem für ein Planetengetriebe bekannt, über die jeweils Bereiche eines Planetengetriebes mit Öl versorgbar sind.

Des Weiteren offenbart die ein DE 102 17 483 A1 ein Fahrzeuggetriebe mit einem Planetengetriebe und mit einer Lamellenbremse.

Zusätzlich zeigt die EP 2 570 700 A ein Planetengetriebe, das im Betrieb mit Schmieröl versorgt wird.

Der vorliegenden Offenbarung liegt die Aufgabe zugrunde, ein Getriebe mit einem Ölverteilungssystem mit wenigstens einem ersten drehbar ausgeführten Bereich und einem zweiten Bereich zur Verfügung zu stellen, mittels welchem eine Ölversorgung eines mit Öl zu beaufschlagenden Bereiches in gewünschtem Umfang möglich ist.

Gemäß der Erfindung umfasst das Getriebe die Merkmale des Anspruchs 1.

Die im Auffangbereich angeordnete Beschleunigungseinrichtung beschleunigt im Betrieb des Ölverteilungssystems das Öl in Umfangsrichtung des Auffangbereiches. Aus dieser Beschleunigung resultiert letztendlich dann die für die Ölversorgung erforderliche radiale Ölströmung im Auffangbereich ausgehend vom radial inneren Bereich in Richtung des radial äußeren Bereiches, für die die am Öl angreifende und in radialer Richtung nach außen wirkende Zentrifugalkraft genutzt wird. Dadurch wird auf einfache Art und Weise gewährleistet, dass in den Auffangbereich im Wesentlichen drucklos eingeleitetes Öl unabhängig von der Wandreibung zwischen dem Auffangbereich und dem in den Auffangbereich eingeleiteten Öl in gewünschtem Umfang zu mit Öl zu versorgenden Bereichen weitergeleitet wird.

Wenn die Strömung des im Auffangbereich vorhandenen Öls ausgehend von einem mit dem ersten Bereich rotierenden Relativsystem betrachtet wird, weist das Öl im Betrieb des Ölverteilungssystems eine im Wesentlichen radiale Strömung auf. Wird die Ölströmung hingegen aus einem stationären System betrachtet, wird das Öl nach dem Eintritt in den Auffangbereich mit der Umfangsgeschwindigkeit des Auffangbereiches bewegt und dadurch zusätzlich im Auffangbereich radial nach außen geführt. Dadurch wird die relative Tangentialgeschwindigkeit des Öls gegenüber dem ersten Bereich minimiert und es baut sich der jeweils für die Ölversorgung gewünschte Öldruck auf.

Dadurch besteht auf einfache Art und Weise die Möglichkeit, das Getriebe während eines sogenannten Normalbetriebes des Strahltriebwerkes, während dem eine gewünschte Beaufschlagung des Bereiches stromab der Auslassöffnung mit Hydraulikfluid ausgehend vom Hauptölkreislauf gewährleistet ist, zusätzlich zu der Versorgung über den Auffangbereich oder lediglich ausgehend vom Hauptölversorgungskreislauf mit Hydraulikfluid zu versorgen. Darüber hinaus besteht auch die Möglichkeit, einen Unterversorgungsbetriebszustand des Getriebes mit Hydraulikfluid ausgehend vom Hauptölversorgungskreislauf durch Beaufschlagung des Bereiches stromab der Auslassöffnung über den Auffangbereich und die Auslassöffnung zu vermeiden, wobei dieser Pfad für das Hydraulikfluid dann Teil eines sogenannten Hilfsölkreislaufes für das Getriebe des Strahltriebwerkes darstellt.

Dabei kann es vorgesehen sein, dass das Hydraulikfluid über den vorzugsweise als geschlossenes System ausgeführten Hauptölversorgungskreislauf unter Druck in den Bereich stromab der Auslassöffnung eingeleitet wird.

Bei einer konstruktiv einfachen Ausführungsform des Ölverteilungssystems des Getriebes weist die Beschleunigungseinrichtung wenigstens ein sich in radialer und in axialer Richtung im Auffangbereich erstreckendes wandartiges Element auf. Das wandartige Element unterteilt den von den Auffangbereich begrenzenden Wänden gebildeten Innenraum des Auffangbereiches in Umfangsrichtung zumindest teilweise in sich in Umfangsrichtung erstreckende Auffangabschnitte. Dieser Ausführungsform liegt die Kenntnis zugrunde, dass das im Auffangbereich vorhandene Öl im Betrieb und damit bei rotierendem ersten Bereich gegen das wandartige Element gedrückt und von diesem aufgrund der im Betrieb angreifenden Zentrifugalkraft radial nach außen umgelenkt wird. Dadurch wird dem Öl die gewünschte radiale Strömung aufgeprägt.

Erstreckt sich das wandartige Element in radialer Richtung des ersten Bereiches über die gesamte radiale Höhe des Auffangbereiches, wird das im Auffangbereich vorhandene Öl im Betrieb des Ölverteilungssystems im Wesentlichen über die gesamte radiale Höhe im Auffangbereich in gewünschtem Umfang umgelenkt bzw. in radialer Richtung nach außen beschleunigt.

Bei einer weiteren vorteilhaften Ausführungsform des Getriebes erstreckt sich das wandartige Element in radialer Richtung des ersten Bereiches nur über einen Teil der radialen Höhe des Auffangbereiches. Dann ist in gewünschtem Umfang zwischen den Auffangabschnitten ein Austausch des Öls möglich, um unerwünschte Unwuchtbetriebssituationen mit geringem Aufwand vermeiden zu können.

Erstreckt sich das wandartige Element in axialer Richtung über die gesamte axiale Breite des Auffangbereiches, wird das Öl vom wandartigen Element über die gesamte axiale Breite des Auffangbereiches in radialer Richtung nach außen umgelenkt und von der im Betrieb des Getriebes am Öl angreifenden Zentrifugalkraft radial nach außen geführt bzw. diesem die radiale Strömung in Richtung des radial äußeren Bereiches des Auffangbereiches aufgeprägt.

Wenn sich das wandartige Element in axialer Richtung nur über einen Teil der axialen Breite des Auffangbereiches erstreckt, ist wiederum auf einfache Art und Weise ein Austausch zwischen den sich in Umfangsrichtung erstreckenden Auffangabschnitten möglich. Dadurch sind wiederum unerwünschte Unwuchtbetriebszustände im Betrieb auf einfache Art und Weise ohne zusätzlichen Betätigungsaufwand vermeidbar.

Unwuchtbetriebszustände werden bei einer weiteren vorteilhaften Ausführungsform des Ölverteilungssystems des Getriebes dadurch vermieden, dass das wandartige Element mit wenigstens einer Aussparung ausgeführt ist, über die zwischen den sich in Umfangsrichtung erstreckenden Auffangabschnitte ein Austausch von Öl möglich ist. Damit stellen die Auffangabschnitte sogenannte miteinander kommunizierende Gefäße dar, in den sich ein einheitlicher Ölstand einstellt.

Ist das wandartige Element eben ausgeführt und schließt es mit dem radial äußeren Bereich und dem radial inneren Bereich des Auffangbereiches jeweils einen spitzen Winkel ein, werden auf einfache Art und Weise so genannte Totraumgebiete mit geringen Strömungsgeschwindigkeiten in Richtung des radial äußeren Bereiches des Auffangbereiches vermieden.

Dabei kann das wandartige Element in radialer Richtung derart schräg verlaufend im Auffangbereich angeordnet sein, dass das dem radial äußeren Bereich des Auffangbereiches zugewandte Ende des wandartigen Elementes in Umfangsrichtung des ersten Bereiches vor oder nach dem dem radial inneren Bereich des Auffangbereiches zugewandten Ende des wandartigen Elementes angeordnet ist.

Um das Öl mit möglichst geringen Strömungsverlusten ausgehend vom radial inneren Bereich des ersten Bereiches in Richtung des radial äußeren Bereiches des Auffangbereiches in gewünschtem Umfang führen zu können, ist das wandartige Element bei einer weiteren vorteilhaften Ausführungsform des Getriebes in radialer Richtung des Auffangbereiches mit einer konkaven oder mit einer konvexen Krümmung ausgebildet.

Die Beschleunigungseinrichtung umfasst bei einer weiteren konstruktiv einfachen Ausführungsform des Ölverteilungssystems des Getriebes ein im Auffangbereich des ersten Bereiches angeordnetes poröses Material, das vorzugsweise als offenzelliges schaumartiges poröses Material ausgebildet ist. Mittels des porösen Materials ist das in dem Auffangbereich eingeleitete Öl im Auffangbereich in Umfangsrichtung beschleunigbar und die im Wesentlichen radiale Strömung in Richtung des radial äußeren Bereiches des Auffangbereiches aufprägbar.

In Abhängigkeit des jeweils vorliegenden Anwendungsfalles kann es vorgesehen sein, dass der gesamte Auffangbereich oder nur ein Teil des Auffangbereiches mit porösem Material befüllt ist. Ist nur ein Teil des Auffangbereiches mit porösem Material befüllt, besteht wiederum die Möglichkeit, dass das poröse Material über den gesamten Umfang des Auffangbereiches vorgesehen ist, sich jedoch nicht über die gesamte radiale Höhe und/oder nicht über die gesamte axiale Breite des Auffangbereiches erstreckt.

Abweichend hiervon kann es auch vorgesehen sein, dass sich das poröse Material nicht über den gesamten Umfang des Auffangbereiches und/oder nicht über die gesamte radiale Höhe und/oder nicht die über die gesamte axiale Breite des Auffangbereiches erstreckt. Dabei können auch mehrere über den Umfang verteilte Bereiche bzw. Abschnitte des Auffangbereiches zumindest teilweise mit porösem Material befüllt sein.

Ist die Beschleunigungseinrichtung mit wenigstens einem Ölfilter ausgeführt, sind aus dem Öl mit geringem Aufwand Schmutzpartikel abtrennbar, bevor dieses in Richtung eines mit Öl zu beaufschlagenden Bereiches weitergeführt wird.

Weist der Auffangbereich in seinem radial äußeren Bereich wenigstens eine Auslassöffnung für das Öl auf, ist das Öl in gewünschtem Umfang in Richtung eines mit Öl zu versorgenden Bereiches aus dem Auffangbereich ausleitbar bzw. weiterleitbar.

Ist der Auffangbereich als eine umlaufende Nut ausgeführt, deren Nutgrund den radial äußeren Bereich des Auffangbereiches bildet und deren offene Seite die Öffnung des radial inneren Bereiches des ersten Bereiches darstellt, ist das Ölverteilungssystem des Getriebes durch einen konstruktiv einfachen Aufbau gekennzeichnet.

Das Öl ist in Abhängigkeit des jeweils vorliegenden Anwendungsfalles in radialer Richtung des Ölverteilungssystems des Getriebes, in axialer Richtung des erfindungsgemäßen Ölverteilungssystems oder mit einer beliebig dazwischen liegenden Orientierung aus dem in den Auffangbereich einleitbar.

Der erste Bereich kann wenigstens annährend rotationssymmetrisch ausgebildet sein. Denkbar ist hierbei eine zylindrische bzw. kreisförmige Grundform. Zusätzlich kann der erste Bereich auch als Vieleck mit einer genügend hohen Eckenanzahl ausgebildet sein.

Alternativ hierzu besteht auch die Möglichkeit, dass der erste Bereich als nicht rotationssymmetrisches Vieleck ausgeführt ist. Dabei kann der erste Bereich in Abhängigkeit des jeweils vorliegenden Anwendungsfalles drei-, vier-, fünf- oder mehreckförmig ausgeführt sein.

Das Getriebe ist bei einer bauraumraumgünstigen und durch eine hohe Leistungsdichte gekennzeichneten Ausführungsform als Planetengetriebe ausgebildet.

Ist der erste Bereich im Bereich einer drehbaren Welle, vorzugsweise im Bereich eines Sonnenrades, eines Planetenträgers, eines Planetenrades und/oder eines Hohlrades vorgesehen, sind mit Öl zu versorgende Bereiche des Getriebes auf konstruktiv einfache Art und Weise mit Öl in gewünschtem Umfang beaufschlagbar.

Sowohl die in den Patentansprüchen angegebenen Merkmale als auch in den nachfolgenden Ausführungsbeispielen des erfindungsgemäßen Ölverteilungssystems angegebenen Merkmale sind jeweils für sich alleine oder in beliebiger Kombination miteinander geeignet, den erfindungsgemäßen Gegenstand weiterzubilden.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine schematische Darstellung eines Flugtriebwerkes mit einem Planetengetriebe;
- Fig. 2a bis Fig. 2d: jeweils eine schematische Ansicht verschiedener Ausführungsbeispiele des Planetengetriebes in einer Längsschnittansicht; und
- Fig. 3a bis Fig. 3m: jeweils eine schematische Ansicht verschiedener Ausführungsbeispiele des Planetengetriebes in einer Querschnittansicht.

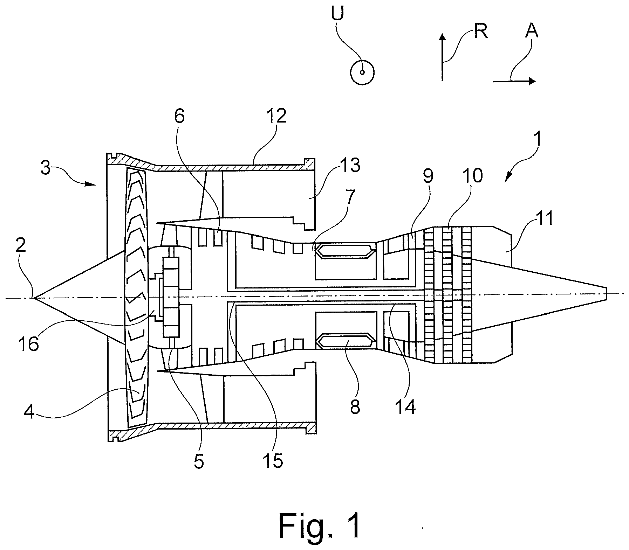

In Fig. 1 ist eine als Strahltriebwerk 1 eines Flugzeugs ausgeführte Strömungsmaschine gezeigt. Das Strahltriebwerk 1 weist eine Haupt- und Drehachse 2 auf. Des Weiteren umfasst das Strahltriebwerk 1 in axialer Strömungsrichtung einen Lufteinlass 3, einen Bläser 4, ein Planetengetriebe 5, einen Zwischendruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Strahltriebwerk 1 und begrenzt den Einlass 3.

Das Strahltriebwerk 1 arbeitet in herkömmlicher Weise, wobei in den Einlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Zwischendruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Zwischendruckverdichter 6 an.

Die die Niederdruckturbine 10 mit dem Zwischendruckverdichter 6 koppelnde Niederdruckwelle 15 treibt den Bläser 4 über das Planetengetriebe 5 an, wobei ein über die Niederdruckwelle 15 an dem Planetengetriebe 5 anliegendes Antriebsmoment der Standübersetzung des Planetengetriebes 5 entsprechend angehoben und einer Bläserwelle 16 zugeführt wird, während die Drehzahl der Niederdruckwelle 15 um den Faktor der Standübersetzung des Planetengetriebes 5 größer ist als die Drehzahl der Bläserwelle 16. Wenn der Bläser 4 von der Niederdruckturbine 10 angetrieben wird, wird die Drehzahl der Niederdruckwelle 15 der Übersetzung des Planetengetriebes 5 im Bereich des Planetengetriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

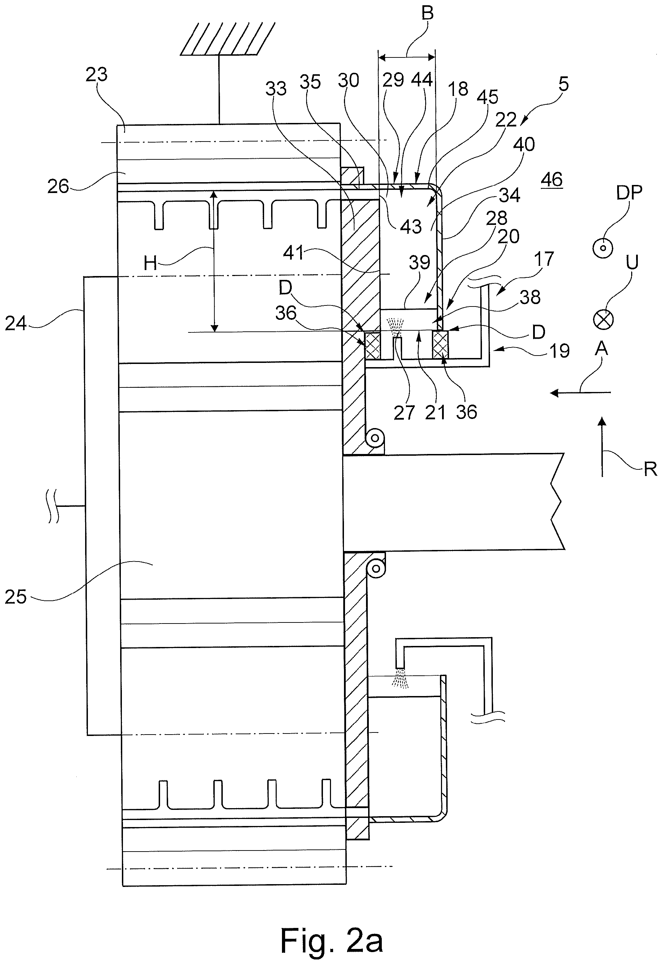

Fig. 2a bis Fig. 2d zeigen jeweils eine vergrößerte detaillierte Längsschnittansicht verschiedener Ausführungsformen des Planetengetriebes 5 gemäß Fig. 1 in Alleinstellung. Da der grundsätzliche Aufbau der in Fig. 2a bis Fig. 2d dargestellten Planetengetriebe 5 jeweils gleich ist und sich die drei Ausführungsformen des Planetengetriebes 5 lediglich in Teilbereich voneinander unterscheiden, wird der grundsätzliche Aufbau sowie die generelle Funktionsweise der Planentengetriebe 5 gemäß Fig. 2a bis Fig. 2d in der nachfolgenden Beschreibung anhand der Darstellung gemäß Fig. 2a näher erläutert.

Das Planetengetriebe 5 umfasst ein gehäuseseitig drehfest ausgeführtes Hohlrad 23, einen mit dem Bläser 4 wirkverbundenen Planetenträger 24 sowie ein mit der Niederdruckturbine 10 gekoppeltes Sonnenrad 25. Zusätzlich sind auf dem Planetenträger 24 Planetenräder 26 drehbar gelagert, die sowohl mit dem Hohlrad 23 als auch mit dem Sonnenrad 25 in Eingriff stehen.

Dem Planetengetriebe 5 ist ein Ölverteilungssystem 17 zugeordnet, das einen ersten drehbar ausgeführten Bereich 18 und einen zweiten Bereich 19 umfasst. Vorliegend ist der erste Bereich 18 des Ölverteilungssystems 17 drehfest mit dem Planetenträger 24 verbunden und rotiert somit mit der gleichen Drehzahl wie der Planetenträger 24 im Betrieb des Strahltriebwerkes 1. Im Unterschied hierzu ist der zweite Bereich 19 gehäuseseitig festgelegt und steht daher im Betrieb des Strahltriebwerks 1 still. Der erste Bereich 18 ist rotationssymmetrisch ausgebildet und weist in seinem radial inneren Bereich 20 eine Öffnung 21 auf. Über die Öffnung 21 ist im Betrieb des Strahltriebwerkes 1 Öl aus dem zweiten Bereich 19 mittels über den Umfang des ersten Bereiches 18 bzw. des Planetenträgers 24 verteilt angeordneten Öldüsen 27 berührungslos in den ersten Bereich 18 über die Öffnung 21 einleitbar bzw. mit geringem Druck einsprühbar. Des Weiteren umfasst der erste Bereich 18 in Bezug auf den zweiten Bereich 19 stromab der Öffnung 21 eine sich in radialer Richtung und in Umfangsrichtung U des ersten Bereiches 18 erstreckenden Auffangbereich 22, der vorliegend als umlaufende Nut ausgeführt ist.

Insgesamt stellt das Ölverteilungssystem 17 eine nicht geschlossene Ölübertragungseinheit dar und ist als so genanntes selbstjustierendes System ausgeführt, bei dem das Öl bzw. das Schmier- und Kühlmittel in die rotierende Nut bzw. in den rotierenden Auffangbereich 22 eingesprüht wird. Innerhalb des Auffangbereiches 22 und im Bereich von sich gegebenenfalls daran anschließenden Verteilungsleitungen 35 wird aufgrund der im Betrieb am Öl angreifenden Zentrifugalkraft ein Versorgungsdruck für mit dem Öl zu beaufschlagende Bereiche des Planetengetriebes 5 aufgebaut.

Um den für die Versorgung der Verzahnung zwischen den Planetenrädern 26 und des Hohlrades 23 sowie der Lager der Planetenräder 21 erforderlichen Versorgungsdruck zu erzielen, ist im Auffangbereich 22 eine fest mit dem ersten Bereich 18 verbundene Beschleunigungseinrichtung 28 für das Öl vorgesehen. Mittels der Beschleunigungseinrichtung 28 ist dem im Auffangbereich 22 vorhandenen Öl bei rotierendem ersten Bereich 18 eine im Wesentlichen radiale Strömung ausgehend vom inneren Bereich 20 in Richtung eines radial äußeren Bereiches 29 des ersten Bereiches 18 bzw. des Auffangbereiches 22 aufprägbar.

Hierfür umfasst die Beschleunigungseinrichtung 28 mehrere sich in radialer Richtung R und in axialer Richtung A des Planetengetriebes 5 im Auffangbereich 22 erstreckende wandartige Elemente 30. Die Elemente 30 unterteilen den von den Auffangbereich 22 begrenzenden Wänden gebildeten Innenraum des Auffangbereiches 22 in sich in Umfangsrichtung U erstreckende Auffangabschnitte 31.

Bei dem in Fig. 2a dargestellten Ausführungsbeispiel des Planetengetriebes 5 erstrecken sich die wandartigen Elemente 30 in axialer Richtung A über die gesamte Breite B des Auffangbereiches 22 zwischen den Auffangbereich 22 seitlich begrenzenden Wänden 33 und 34. Dabei ist die Wand 33 vorliegend einstückig mit dem Planetenträger 24 ausgeführt. Zusätzlich erstrecken sich die wandartigen Elemente 30 in radialer Richtung R des Ölverteilungssystems 17 bzw. des Planetengetriebes 5 ausgehend vom radial äußeren Bereich 29 nur über einen Teil der radialen Höhe H des Auffangbereiches 22. Damit sind die Auffangabschnitte 31 jeweils über Radialspalte 38 miteinander verbunden, die zwischen der Öffnung 21 des ersten Bereiches 18 und den der Öffnung 21 zugewandten Enden 39 der wandartigen Elemente 30 ausgebildet sind und über die ein definierter Austausch von Öl zwischen den Auffangabschnitten 31 möglich ist.

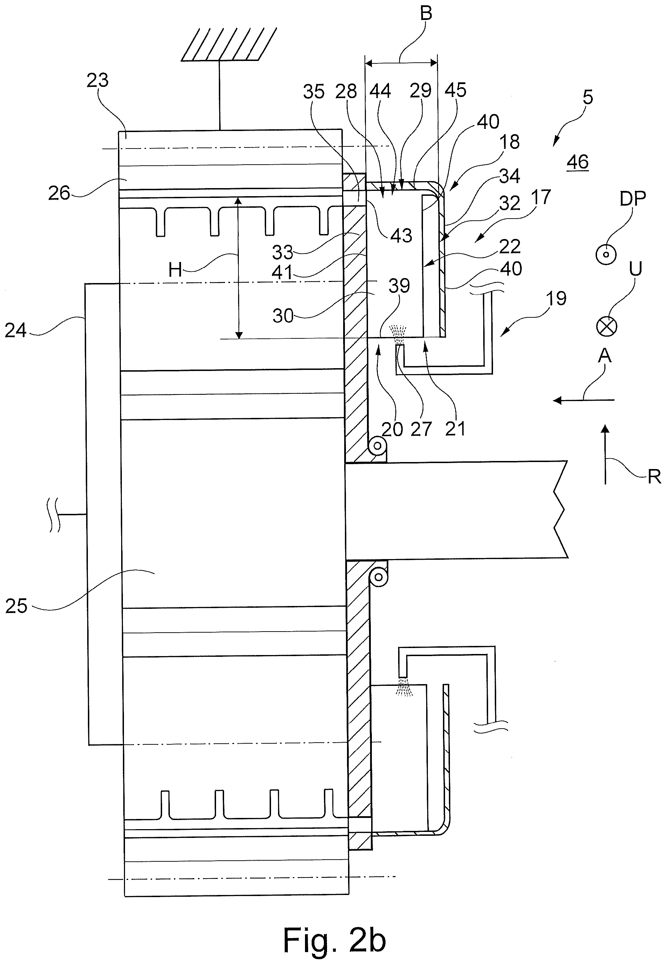

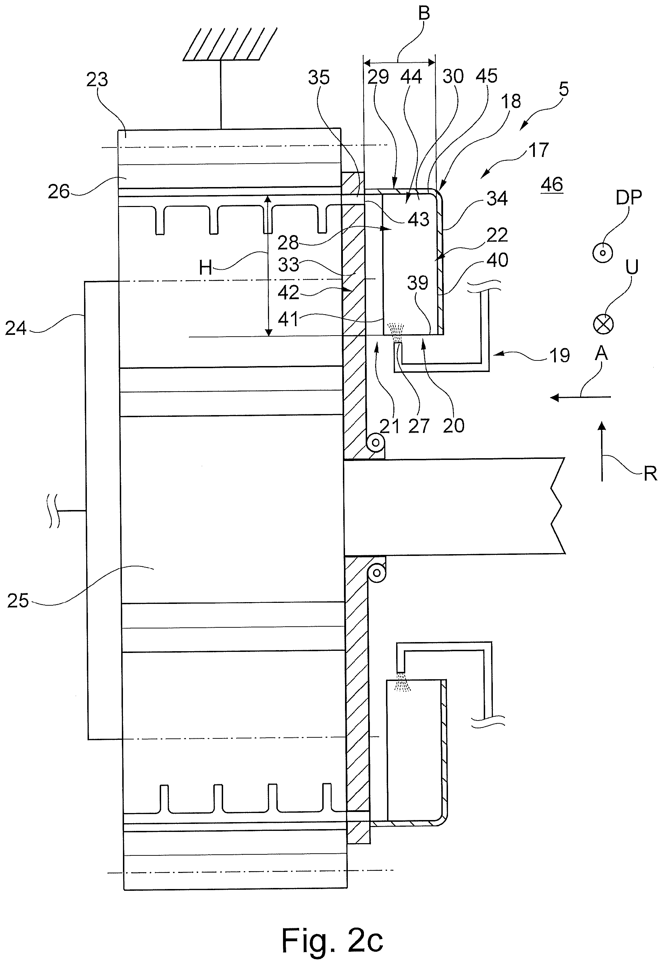

Im Unterschied hierzu erstrecken sich die wandartigen Elemente 30 der Planetengetriebe 5 gemäß Fig. 2b und Fig. 2c in radialer Richtung R des ersten Bereiches 18 über die gesamte radiale Höhe H des Auffangbereiches 22 und in axialer Richtung A lediglich über einen Teil der axialen Breite B.

Dabei weist das Ölverteilungssystem 17 gemäß Fig. 2b zwischen der Wand 34 und der Wand 34 zugewandten Seiten 40 der wandartigen Elemente 30 jeweils Axialspalte 32 auf, über die ebenfalls ein definierter Austausch von Öl zwischen den Auffangabschnitten 31 möglich ist. Im Unterschied hierzu ist das Ölverteilungssystem 17 des Planetengetriebes 5 gemäß Fig. 2c im Bereich zwischen der Wand 33 und der Wand 33 zugewandten Seiten 41 der wandartigen Elemente 30 jeweils mit Axialspalten 42 ausgeführt, über die ebenfalls ein definierter Austausch von Öl zwischen den Auffangabschnitten 31 möglich ist. Sowohl über die Axialspalte 32 und 42 als auch über die Radialspalte 38 sind auf einfache Art und Weise Unwuchtbetriebszustände aufgrund von unterschiedlichen Füllständen in den Auffangabschnitten 31 vermeidbar.

Das als nicht geschlossenes System ausgeführte Ölverteilungssystem 17 bietet auf einfache Art und Weise die Möglichkeit, dass sich im Auffangbereich 22 im Betrieb des Strahltriebwerks 1 in Abhängigkeit der Drehzahl des Planetenträgers 24 unterschiedlich hohe Flüssigkeitspegel in radialer Richtung R einstellen. Der Versorgungsdruck im rotierenden System steht wiederum in Abhängigkeit des sich im Auffangbereich 22 einstellenden Flüssigkeitspegels. Die Konsequenz daraus ist ein selbstjustierendes und robustes Versorgungssystem, über das die Verbraucher, beispielsweise die Lager der Planetenräder 26, mit wesentlich geringerer Abhängigkeit vom Gegendruck mit Öl versorgbar sind. Ist der Gegendruck, also der vorherrschende Druck im Bereich der Ölverbraucher, und der Druckverlust bis hin zu den Ölverbrauchern innerhalb eines für die Ölversorgung gewährleistenden Druckbereiches, erfolgt die Selbstjustierung über den Flüssigkeitspegel in den stromab des Auffangbereiches 22 angeordneten Versorgungsleitungen.

Bei steigendem Ölvolumenstrom nimmt auch der Versorgungsdruck zu, sodass umso mehr Ölvolumenstrom in Richtung der Ölverbraucher geführt wird. Im Unterschied hierzu sinkt der Versorgungsdruck bei sinkendem Volumenstrom und bei entsprechend ausgelegtem Gegendruck im Bereich der Versorgungsleitungen 35, womit ein Leerlaufen des gesamten Ölsystems verhindert wird. Damit wird zwar eine reduzierte, jedoch kontinuierliche Versorgung gewährleistet.

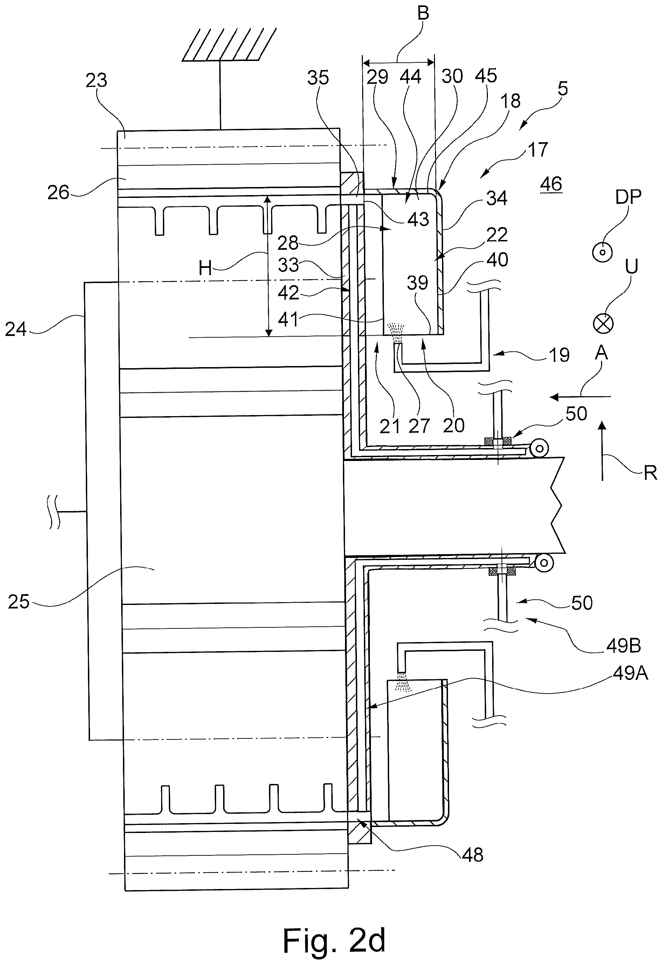

Eine weitere vorteilhafte Ausführungsform des Planetengetriebes 5 zeigt Fig. 2d, bei der ein stromab der Auslassöffnung 43 vorgesehener Bereich 48 des Planetengetriebes 5 zusätzlich mit einem Hauptölversorgungskreislauf 49 des Strahltriebwerkes 1 in Wirkverbindung steht. Dabei verläuft ein Teil 49A des Hauptölversorgungskreislaufes 49 im Planetenträger 24. Der Teil 49A des Hauptölversorgungskreislaufes 49 steht mit einem außerhalb des Planetenträgers 24 verlaufenden Teil 49B des Hauptölversorgungskreislaufes 49 in Wirkverbindung. Die Schnittstelle zwischen den Teilen 49A und 49B ist vorliegend über eine Dichteinrichtung 50 gegenüber der Umgebung 46 abgedichtet, um eine unerwünschte Leckage zu vermeiden.

Bei dieser Ausführungsform des Planetengetriebes 5 besteht die Möglichkeit, das Planetengetriebe 5 während eines sogenannten Normalbetriebes des Strahltriebwerkes 1, während dem eine gewünschte Beaufschlagung des Bereiches 48 stromab der Auslassöffnung mit Hydraulikfluid gewährleistet ist, zusätzlich zu der Versorgung des Bereiches 48 über den Auffangbereich 22 oder lediglich ausgehend vom Hauptölversorgungskreislauf 49 mit Hydraulikfluid zu versorgen. Darüber hinaus besteht auch die Möglichkeit, einen Unterversorgungsbetriebszustand des Planetengetriebes 5 mit Hydraulikfluid ausgehend vom Hauptölversorgungskreislauf 49 durch Beaufschlagung des Bereiches 48 stromab der Auslassöffnung 43 über den Auffangbereich 22 und die Auslassöffnung 43 zu vermeiden, wobei dieser Pfad für das Hydraulikfluid dann einen sogenannten Hilfsölkreislauf des Strahltriebwerkes 1 darstellt.

Dabei kann es vorgesehen sein, dass das Hydraulikfluid über den vorzugsweise als geschlossenes System ausgeführten Hauptölversorgungskreislauf 49 unter Druck in den Bereich 48 stromab der Auslassöffnung 43 eingeleitet wird.

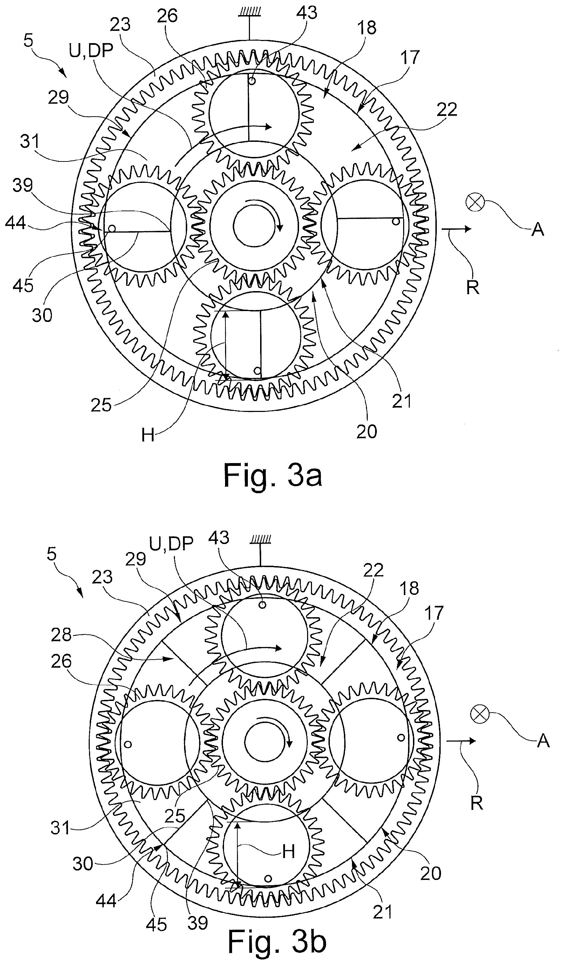

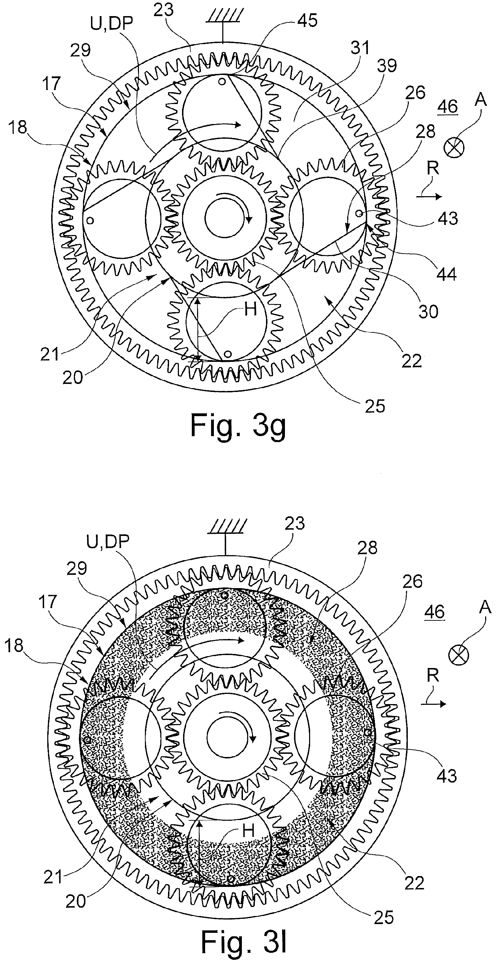

Fig. 3a bis Fig. 3m zeigen jeweils Querschnittsansichten verschiedener Ausführungsformen des Planetengetriebes 5, deren grundsätzlicher Aufbau und deren Funktionsweise wiederum dem Aufbau und der Funktionsweise des Planetengetriebes 5 gemäß Fig. 2a entspricht. Zugunsten der Übersichtlichkeit wird in der nachfolgenden Beschreibung zu den Fig. 3a bis 3m jeweils nur auf die Unterschiede zwischen den verschiedenen Ausführungsbeispielen des Planetengetriebes 5 näher eingegangen und bezüglich des grundsätzlichen Aufbaus und der Funktionsweise auf die vorstehende Beschreibung zu Fig. 2a verwiesen.

Bei dem in Fig. 3a dargestellten Ausführungsbeispiel des Ölverteilungssystems 17 verlaufen die vier wandartigen Elemente 30 im Auffangbereich 22 geradlinig radial nach außen und erstrecken sich über die gesamte radiale Höhe H und die gesamte radiale Breite B des Auffangbereiches 22, womit diese den Auffangbereich 22 in Umfangsrichtung U ohne Ölaustausch zwischen den Auffangabschnitten 31 unterteilen. Zwischen den von den wandartigen Elementen 30 in Umfangsrichtung U voneinander separierten Auffangabschnitten 31 ist im Wesentlichen kein Ölaustausch möglich, weshalb jedem Auffangabschnitt 31 eine Öldüse 27 zugeordnet ist. Des Weiteren sind die wandartigen Elemente 30 in Umfangsrichtung U des Planetenträgers 24 jeweils im Bereich der Planetenräder 26 positioniert.

Mündungsbereiche 43 der Versorgungsleitungen 35 in den Auffangbereich 22, über die Öl aus dem Auffangbereich 22 bzw. aus den Auffangabschnitten 31 unter anderem in Richtung der Lager der Planetenräder 26 ausleitbar ist, sind in Umfangsrichtung U des Planetenträgers 24 ebenfalls im Bereich der Planetenräder 26 angeordnet. Dabei sind die wandartigen Elemente 30 in Bezug auf die Mündungsbereiche 43 jeweils in Verbindungsbereichen 44 zwischen den wandartigen Elementen 30 und dem äußeren radialen Bereich 29 des ersten Bereiches 18 sowie in Drehrichtung DP des Planetenträgers 24 vor den wandartigen Elementen vorgesehen. Dadurch wird das sich bei rotierendem Planetenträger 24 jeweils von den wandartigen Elementen 30 in radialer Richtung R umgelenkte Öl in gewünschtem Umfang aus dem Auffangbereich 22 ausgeleitet.

Im Unterschied hierzu sind die wandartigen Elemente 30 bei dem in Fig. 3b gezeigten Ausführungsbeispiel des Planetengetriebes 5 in Umfangsrichtung U versetzt zu den Planetenrädern 26 angeordnet.

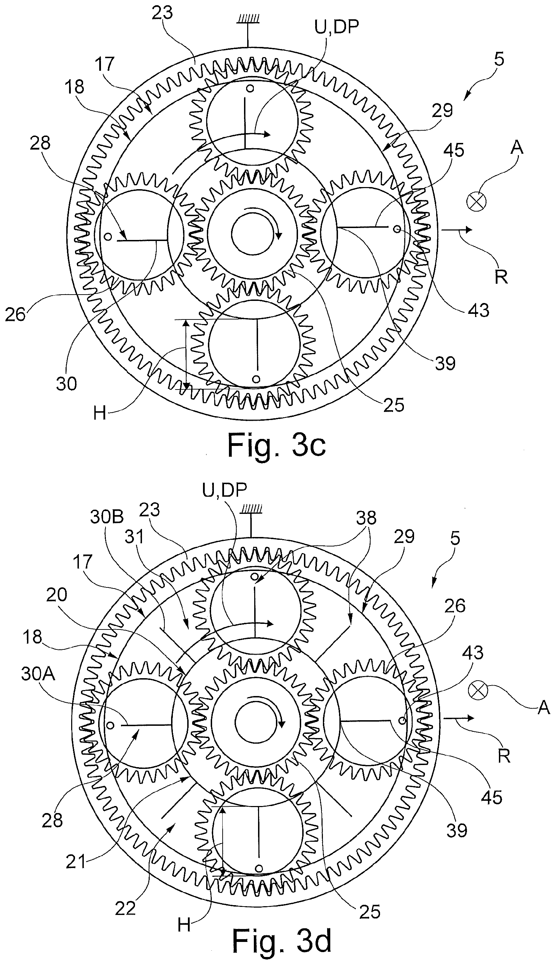

Die wandartigen Elemente 30, 30A, 30B erstrecken sich bei den in Fig. 3c und in Fig. 3d dargestellten Ausführungsbeispielen des Planetengetriebes 5 in radialer Richtung R des Planetengetriebes 5 bzw. des ersten Bereiches 18 ausgehend vom radial inneren Bereich 20 und Richtung des äußeren radialen Bereiches 29 nur über einen Teil der radialen Höhe H des Auffangbereiches 22. Bei diesen Ausführungsformen des Planetengetriebes 5 sind die Axialspalte 32 zwischen dem radial äußeren Bereich 29 und dem radial äußeren Bereich 29 zugewandten Enden 45 der wandartigen Elemente 30, 30A, 30B vorgesehen. Damit ist wiederum ein Ölaustausch zwischen den von den wandartigen Elementen 30, 30A, 30B begrenzten Auffangabschnitten 31 möglich, um aus unterschiedlichen Ölständen im Bereich der Auffangabschnitte 31 resultierende Unwuchtbetriebszustände auf einfache Art und Weise vermeiden zu können.

Das in Fig. 3c gezeigte Ölverteilungssystem 17 ist wiederum mit vier wandartigen Elementen 30 ausgebildet, die in gleichem Umfang wie die wandartigen Elemente 30 gemäß Fig. 3a im Auffangbereich 30 angeordnet sind. Im Unterschied hierzu umfasst das Ölverteilungssystem 17 gemäß Fig. 3d acht wandartige Elemente 30A, 30B. Dabei sind die vier wandartigen Elemente 30A in gleichem Umfang wie die vier wandartigen Elemente 30 gemäß Fig. 3c im Auffangbereich 22 angeordnet, während die vier weiteren wandartigen Elemente 30B zusätzlich zu den Elementen 30A in dem zu Fig. 3b beschriebenen Umfang im Auffangbereich 22 in Umfangsrichtung U versetzt zu den Planetenrädern 26 und den Mündungsbereichen 43 verbaut sind.

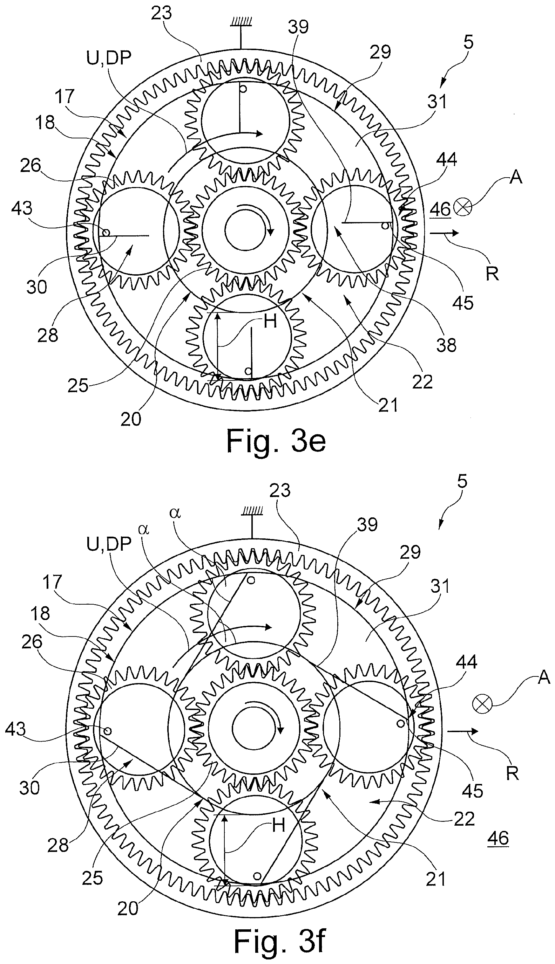

Im Unterschied zu den in Fig. 3c und Fig. 3d dargestellten Ausführungsbeispielen sind bei dem in Fig. 3e gezeigten Ausführungsbeispiel des Planetengetriebes 5, dessen Ölverteilungssystem 17 mit vier wandartigen Elementen 30 ausgebildet ist, in dem zu Fig. 2a beschriebenen Umfang zwischen den Enden 39 der wandartigen Elementen 30 und dem radial inneren Bereich 20 des ersten Bereiches 18 jeweils die Axialspalte 32 vorgesehen. Dabei sind die wandartigen Elemente 30 des Planetengetriebes 5 gemäß Fig. 3e wiederum eben und in radialer Richtung R im Auffangbereich 22 verlaufend angeordnet.

Bei dem in Fig. 3f gezeigten Ausführungsbeispiel des Ölverteilungssystems 17 erstrecken sich die vier wandartigen Elemente 30 im Wesentlichen über die gesamte radiale Höhe H des Auffangbereiches 22 und schließen mit dem radial äußeren Bereich 29 und dem radial inneren Bereich 20 des ersten Bereiches 18 jeweils einen spitzen Winkel α ein. Dabei sind die vier wandartigen Elemente 30 derart schräg verlaufend im Auffangbereich 22 angeordnet, dass jeweils das dem radial inneren Bereich 20 zugewandte Ende 39 der wandartigen Elemente 30 in Umfangsrichtung U bzw. in Drehrichtung DP des ersten Bereiches 18 vor dem dem radial äußeren Bereich 29 zugewandten Ende 45 angeordnet ist.

Im Unterschied hierzu sind die vier wandartigen Elemente 30 des in Fig. 3g dargestellten Ausführungsbeispiels des Ölverteilungssystems 17 derart schräg verlaufend im Auffangbereich 22 angeordnet, dass jeweils das dem radial inneren Bereich 20 zugewandte Ende 39 der wandartigen Elemente 30 in Umfangsrichtung U bzw. in Drehrichtung DP des ersten Bereiches 18 nach dem dem radial äußeren Bereich 29 zugewandten Ende 45 angeordnet ist.

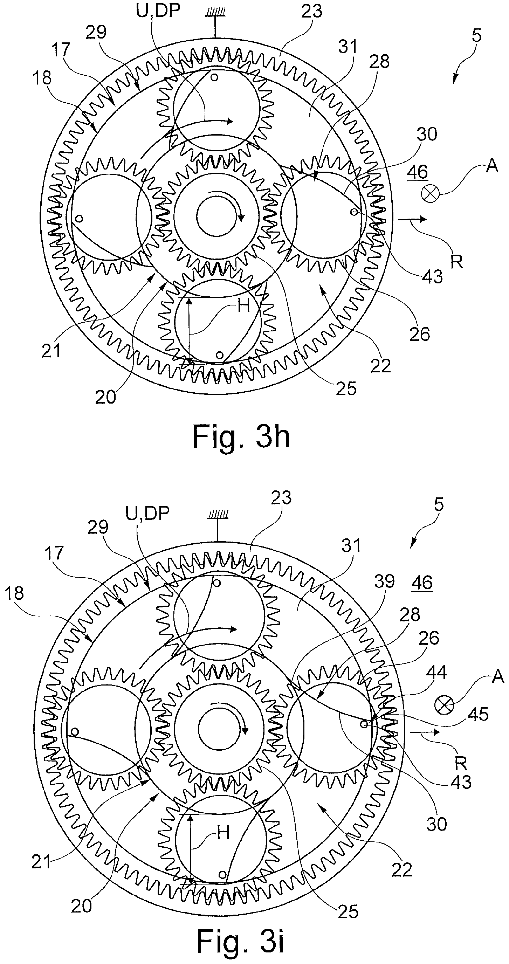

Des Weiteren sind die wandartigen Elemente 30 bei den in Fig. 3h und 3i gezeigten Ausführungsformen des Ölverteilungssystems 17 zusätzlich mit einer konvexen bzw. mit einer konkaven Krümmung ausgeführt, um das Öl mit möglichst geringen Verlusten in radialer Richtung R im Bereich des Auffangbereiches 22 in gewünschtem Umfang beschleunigen zu können.

Des Weiteren besteht auch die Möglichkeit, dass die wandartigen Elemente 30 als Siebe, Lochbleche, Filter und dergleichen ausgeführt sind, um den Austausch von Öl zwischen den Auffangabschnitten 31 zu ermöglichen und das Öl im Bereich des Auffangbereiches 22 filtern zu können sowie eine Spritzreduktion zu erzielen.

Sind die wandartigen Elemente 30 mit Sieben zur Filtration ausgebildet, ist eine geschlossene Ausführung der wandartigen Elemente, d. h. eine Ausführung des Ölverteilungssystems 17 ohne Radial- und Axialspalte vorteilhaft. Zusätzlich ist auch ein partieller Einsatz von Fluidfiltern im Bereich der wandartigen Elemente 30 denkbar.

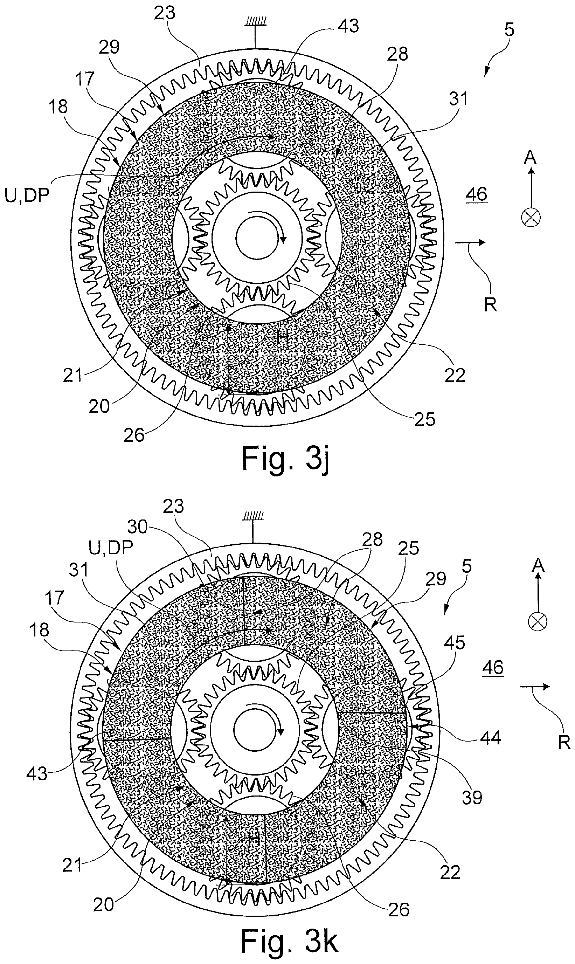

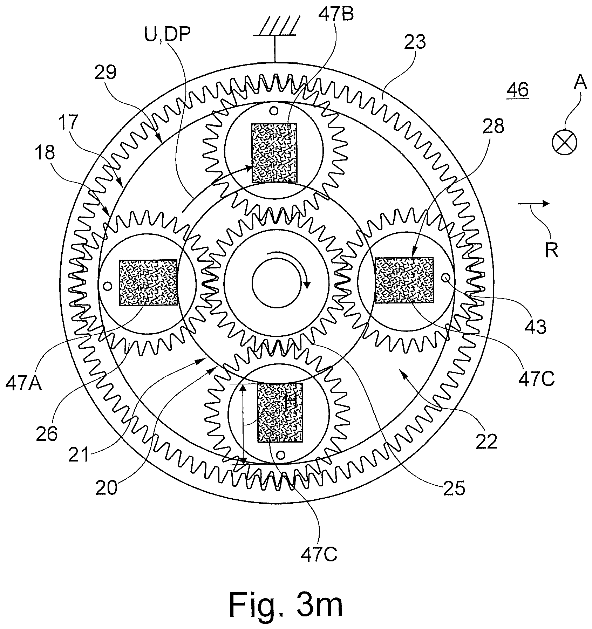

Die in Fig. 3j und 3m dargestellten Ausführungsbeispiele des Planetengetriebes 5 sind im Auffangbereich 22 mit Beschleunigungseinrichtungen 28 ausgeführt, die jeweils ein poröses Medium umfassen. Die Beschleunigungseinrichtung 28 des Ölverteilungssystems 17 des Planetengetriebes 5 gemäß Fig. 3k ist zusätzlich noch mit den wandartigen Elementen 30 ausgeführt. Dabei besteht die Möglichkeit, das poröse Material im Auffangbereich 22 in Form eines Metallschaumes oder dergleichen auszuführen. Der Einsatz eines solchen porösen Mediums bietet den Vorteil, dass ein Gespritze reduzierbar ist, falls der Fluidstrahl auf unstetig rotierende Bauteile trifft. Des Weiteren ist der Fluidstrahl ausgehend von den Öldüsen 27 auf das poröse Medium im Bereich des Auffangbereiches 22 direkt richtbar, ohne ein starkes Verspritzen des Öles zu verursachen.

Ein weiterer Vorteil, der durch den Einsatz des porösen Mediums erzielbar ist, ist die Reduktion von Gasblasen im Öl, die durch das Auftreffen des Fluidstrahls bzw. Ölstrahls auf die rotierenden Bauteile erzeugt werden können. Derartige Gasblasen im Schmiermittel sollten stets reduziert werden, da diese zu einer Funktionseinbuße führen können. Zusätzlich besteht auch die Möglichkeit, das poröse Medium als Filter zu verwenden, um unerwünschte Schmutzpartikel aus dem Öl zu extrahieren.

Bei den in Fig. 3j und Fig. 3k gezeigten Ausführungsbeispielen ist jeweils der gesamte Auffangbereich 22 mit porösem Material befüllt. Im Unterschied hierzu ist der Auffangbereich 22 bei dem in Fig. 3I darstellten Ausführungsbeispiel des Ölverteilungssystems 17 nur zum Teil mit porösem Material befüllt. Dabei erstreckt sich der mit porösem Material befüllte Bereich des Auffangbereiches 22 über dessen gesamten Umfang, jedoch lediglich über einen Teil der gesamten radialen Höhe H des Auffangbereiches 22 ausgehend vom radial äußeren Bereich 29 radial nach innen und zusätzlich über die gesamte axiale Breite B.

Hiervon abweichend sind bei dem Ausführungsbeispiel des Ölverteilungssystems 17 gemäß Fig. 3m lediglich vier gleichmäßig über den Umfang des Auffangbereiches 22 verteilt angeordnete Bereiche 47A bis 47D des Auffangbereiches 22 mit porösem Material befüllt. Die Bereiche 47A bis 47D erstrecken sich in Umfangsrichtung des Auffangbereiches 22 lediglich über eine definierte Breite. Darüber hinaus erstrecken sich die Bereiche 47A bis 47D ausgehend von radial inneren Bereich 20 auch nur über einen Teil der gesamten radialen Höhe H des Auffangbereiches 22 in Richtung des äußeren radialen Bereiches 29. Zusätzlich entspricht die Breite der Bereiche 47A bis 47D im Wesentlichen der gesamten axialen Breite B des Auffangbereiches 22.

Das Ölverteilungssystem 17 des Planetengetriebes 5 ist aufgrund der vorstehend näher beschriebenen Funktionsweise zentrifugalkraft- und damit drehzahlabhängig. Eine Ölversorgung von hydraulischen Verbrauchern ist mit einem vorstehend näher beschriebenen Ölverteilungssystem 17 unter Druck im Stillstand nicht möglich.

Um jedoch auch im Stillstand des ersten Bereiches 18 eine Ölversorgung des Planetengetriebes 5 gewährleisten zu können, besteht die Möglichkeit, das Ölverteilungssystem 17 in der nachfolgend näher beschriebenen Art und Weise auszuführen.

Hierfür ist das Ölverteilungssystem 17 in der lediglich im oberen Teil des Planetengetriebes 5 gemäß Fig. 2a dargestellten Art und Weise im Bereich zwischen dem ersten drehbaren Bereich 18 und dem zweiten Bereich 19 mit einer Dichteinrichtung 36 ausgebildet, über die der Zuführbereich des Öls aus dem zweiten Bereich 19 in den ersten drehbaren Bereich 18 gegenüber der Umgebung 46 abgedichtet wird. Dabei ist die Dichtwirkung der Dichteinrichtung 36 aber nur unterhalb einer bestimmten Drehzahl oder im Stillstand des ersten drehbar ausgeführten Bereiches 18 wirksam. Damit wird im Stillstand des ersten drehbaren Bereiches 18 ein Ölaustritt aus dem Ölverteilungssystem 17 in Richtung der Umgebung 46 auf einfache Art und Weise vermieden.

Der Druck des Öls stellt sich bei einer Rotation des drehbaren Bereiches 18 durch ein Gleichgewicht aus der auf das Öl wirkenden Zentrifugalkraft und aus dem statischen Druck der Flüssigkeitssäule des Öls im Auffangbereich 22 unter der entgegenwirkenden Schwerkraft ein. Bei hinreichend hohen Drehzahlen des ersten drehbaren Bereiches 18 und einer daraus resultierenden hinreichend großen Zentrifugalkraft liegt dem Ölverteilungssystem 17 die vorstehend beschriebene selbstjustierende Wirkung zugrunde.

Um die selbstjustierende Wirkung durch die Dichteinrichtung 36 nicht zu beeinträchtigen, ist die Dichteinrichtung 36 so ausgebildet und/oder im Ölverteilungssystem 17 so angeordnet, dass sie im Betrieb aufgrund der angreifenden Zentrifugalkraft zum Druckausgleich zwischen der Umgebung 46 und dem Zuführbereich des Öls zwischen dem ersten Bereich 18 und dem zweiten Bereich 19 eine Verbindung herstellt.

Bei der in Fig. 2a dargestellten Ausführungsform des Ölverteilungssystems 17 wird das Öl aus dem zweiten Bereich 19 in radialer Richtung R in den ersten drehbaren Bereich 18 eingespritzt.

Die Dichteinrichtung 36 ist vorliegend fest mit dem zweiten Bereich 19 verbunden. Im Betrieb des Planetengetriebes 5 und damit bei rotierendem ersten Bereich 18 wird der erste Bereich 18 aufgrund der Zentrifugalkraft nach außen bewegt, während die Dichteinrichtung 36 in Ruhe ist. Aufgrund der radialen Bewegung des ersten Bereiches 18 relativ zur Dichteinrichtung 36 wird zwischen der Dichteinrichtung 36 und dem ersten Bereich 18 ein Dichtspalt D frei, der einen Druckausgleich zwischen der Umgebung 46 und dem Ölzuführbereich aus dem zweiten Bereich 19 in Richtung des ersten Bereiches 18 ermöglicht. Somit kann im Betrieb des Planetengetriebes 5, bei dem der Planetenträger 24 rotiert, wieder eine selbstjustierende Ölversorgung vorliegen.

Abweichend hiervon besteht auch die Möglichkeit, dass die Dichteinrichtung 36 fest mit dem zweiten Bereich 18 verbunden ist und bei rotierendem ersten Bereich 18 vom zweiten Bereich 19 abhebt. Dann stellt sich der Dichtspalt D jeweils zwischen der Dichteinrichtung 36 und dem zweiten Bereich 19 ein, um den gewünschten Druckausgleich zu ermöglichen.

Zusätzlich hierzu oder alternativ dazu besteht auch die Möglichkeit, das Ölverteilungssystem 17 im Bereich des Sonnenrades 25 anzuordnen, wobei dann der erste drehbare Bereich 18 mit dem Sonnenrad zu koppeln ist, um im Betrieb des Planetengetriebes 5 die für die Ölversorgung des Verzahnungsbereiches zwischen dem Sonnenrad 25 und den Planetenrädern 26 erforderliche Rotation aufbringen zu können.

Des Weiteren besteht auch Möglichkeit, das Ölverteilungssystem 17 im Bereich des Hohlrades 23 anzuordnen, wenn das Hohlrad drehbar ausgeführt ist. Neben der vorbeschriebenen Versorgung des Planetengetriebes 5 mit Öl besteht auch die Möglichkeit, andere rotierende Bauteile des Strahltriebwerkes 1, wie Lagereinrichtungen und dergleichen über das Ölverteilungssystem 17 in dem vorstehend näher erläuterten Umfang mit Öl zu beaufschlagen.

### Bezugszeichenliste

- 1: Strömungsmaschine; Strahltriebwerk
- 2: Hauptdrehachse
- 3: Lufteinlass
- 4: Bläser
- 5: Planetengetriebe
- 6: Zwischendruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 17: Ölverteilungssystem
- 18: erster drehbar ausgeführter Bereich
- 19: zweiter Bereich
- 20: radial innerer Bereich des ersten Bereiches 18
- 21: Öffnung des ersten Bereiches 18
- 22: Auffangbereich
- 23: Hohlrad
- 24: Planetenträger
- 25: Sonnenrad
- 26: Planetenrad
- 27: Öldüse
- 28: Beschleunigungseinrichtung
- 29: radial äußerer Bereich des ersten Bereiches 18
- 30, 30A, 30B: wandartiges Element
- 31: Auffangabschnitt
- 32: Axialspalt
- 33: Wand
- 34: Wand
- 35: Versorgungsleitung
- 36: Dichteinrichtung
- 38: Radialspalt
- 39: Ende des wandartigen Elementes
- 40, 41: Seite des wandartigen Elementes
- 42: Axialspalt
- 43: Mündungsbereich
- 44: Verbindungsbereich zwischen den wandartigen Elementen und dem radial äußeren Bereich 29
- 45: Ende des wandartigen Elementes
- 46: Umgebung
- 47A bis 47D: Bereich des Auffangbereiches
- 48: Bereich des Getriebes
- 49: Hauptölkreislauf
- 49A, 49B: Teil des Hauptölkreislaufes
- 50: Dichteinrichtung
- A: axiale Richtung
- B: axiale Breite des Auffangbereiches
- D: Dichtspalt
- DP: Drehrichtung des Planetenträgers
- H: radiale Höhe des Auffangbereiches
- R: radiale Richtung
- U: Umfangsrichtung

## Patentansprüche

1. Getriebe (5) mit einem Ölverteilungssystem (17) mit wenigstens einem ersten drehbar ausgeführten Bereich (18) und einem zweiten Bereich (19),
wobei der erste Bereich (18) in seinem radial inneren Bereich (20) zumindest bereichsweise mit wenigstens einer Öffnung (21) ausgebildet ist, über die im Betrieb Öl aus dem zweiten Bereich (19) berührungslos in den ersten Bereich (18), eingeleitet wird,
wobei der erste Bereich (18) in Bezug auf den zweiten Bereich (19) stromab der Öffnung (21) einen sich in radialer Richtung und in Umfangsrichtung (U) des ersten Bereiches (18) erstreckenden Auffangbereich (22) umfasst,
wobei im Auffangbereich (22) wenigstens eine fest mit dem ersten Bereich (18) verbundene Beschleunigungseinrichtung (28) für das Öl vorgesehen ist, mittels der das im Auffangbereich (22) vorhandene Öl bei rotierendem ersten Bereich (18) in Umfangsrichtung des Auffangbereiches (22) beschleunigt wird und dem Öl eine im Wesentlichen radiale Strömung in Richtung eines radial äußeren Bereiches (29) des Auffangbereiches (22) aufgeprägt wird,
wobei der Auffangbereich (22) in seinem radial äußeren Bereich (29) wenigstens eine Auslassöffnung (43) für das Öl aufweist, und **dadurch gekennzeichnet, dass** ein stromab der Auslassöffnung (43) vorgesehener Bereich (48) des Getriebes (5) zu dessen Ölversorgung zusätzlich mit einem Hauptölversorgungskreislauf (49) eines Strahltriebwerkes (1) in Wirkverbindung gebracht wird oder in Wirkverbindung steht.

2. Getriebe nach Anspruch 1, **dadurch gekennzeichnet, dass** die Beschleunigungseinrichtung (28) wenigstens ein sich in radialer Richtung (R) und in axialer Richtung (A) im Auffangbereich (22) erstreckendes wandartiges Element (30; 30A, 30B) aufweist, das den von den Auffangbereich (22) begrenzenden Wänden (33, 34) gebildeten Innenraum des Auffangbereiches (22) in Umfangsrichtung (U) zumindest teilweise sich in Umfangsrichtung (U) erstreckende Auffangabschnitte (31) unterteilt.

3. Getriebe nach Anspruch 2, **dadurch gekennzeichnet, dass** sich das wandartige Element (30) in radialer Richtung (R) des ersten Bereiches (18) über die gesamte radiale Höhe (H) des Auffangbereiches (22) erstreckt.

4. Getriebe nach Anspruch 2, **dadurch gekennzeichnet, dass** sich das wandartige Element (30) in radialer Richtung (R) des ersten Bereiches (18) nur über einen Teil der radialen Höhe (H) des Auffangbereiches (22) erstreckt.

5. Getriebe nach einem der Ansprüche 2 bis 4, **dadurch gekennzeichnet, dass** sich das wandartige Element (30) in axialer Richtung (A) über die gesamte axiale Breite (B) des Auffangbereiches (22) erstreckt.

6. Getriebe nach einem der Ansprüche 2 bis 4, **dadurch gekennzeichnet, dass** sich das wandartige Element (30) in axialer Richtung (A) nur über einen Teil der axialen Breite (B) des Auffangbereiches (22) erstreckt.

7. Getriebe nach einem der Ansprüche 2 bis 6, **dadurch gekennzeichnet, dass** das wandartige Element (30) mit wenigstens einer die sich in Umfangsrichtung (U) erstreckenden Auffangabschnitte (31) in Umfangsrichtung (U) verbindenden Aussparung ausgeführt ist.

8. Getriebe nach einem der Ansprüche 2 bis 7, **dadurch gekennzeichnet, dass** das wandartige Element (30) eben ausgeführt ist und mit dem radial äußeren Bereich (29) und mit dem radial inneren Bereich (20) des Auffangbereiches (22) jeweils einen spitzen Winkel (a) einschließt.

9. Getriebe nach einem der Ansprüche 2 bis 8, **dadurch gekennzeichnet, dass** das wandartige Element (30) in radialer Richtung des Auffangbereiches (22) mit einer konkaven oder mit einer konvexen Krümmung ausgebildet ist.

10. Getriebe nach einem der Ansprüche 1 bis 9, **dadurch gekennzeichnet, dass** die Beschleunigungseinrichtung (28) ein im Auffangbereich (22) des ersten Bereiches (18) angeordnetes poröses Material, vorzugsweise ein offenzelliges, schaumartiges poröses Material, umfasst, in deren Bereich dem in den Auffangbereich (22) eingeleiteten Öl im Auffangbereich (22) die im Wesentlichen radiale Strömung in Richtung des radial äußeren Bereiches (29) des Auffangbereiches (3) aufgeprägt wird.

11. Getriebe nach einem der Ansprüche 1 bis 10, **dadurch gekennzeichnet, dass** die Beschleunigungseinrichtung (28) mit wenigstens einem Ölfilter ausgeführt ist.

12. Getriebe nach einem der Ansprüche 1 bis 11, **dadurch gekennzeichnet, dass** der Auffangbereich (22) als eine umlaufende Nut ausgeführt ist, deren Nutgrund den radial äußeren Bereich (29) des Auffangbereiches bildet und deren offene Seite die Öffnung (21) des radial inneren Bereiches (20) des ersten Bereiches (18) bildet.

13. Getriebe nach einem der Ansprüche 1 bis 12, **dadurch gekennzeichnet, dass** das Getriebe (5) als Planetengetriebe (5) ausgeführt ist.

14. Getriebe nach Anspruch 13, **dadurch gekennzeichnet, dass** der erste Bereich (18) im Bereich einer drehenden Welle, vorzugsweise im Bereich eines Sonnenrades (25), eines Planetenträgers (24), eines Planetenrades (26) und/oder eines Hohlrades (23) vorgesehen ist.

## Claims

1. Transmission (5) with an oil-distributing system (17) with at least a first region (18), which is designed to be rotatable, and a second region (19), wherein the first region (18), in the radially inner region (20) thereof, is formed at least regionally with at least one opening (21) via which oil is introduced from the second region (19) into the first region (18) in contact-free fashion during operation, wherein the first region (18) comprises, downstream of the opening (21) in relation to the second region (19), a collecting region (22) which extends in a radial direction and in a circumferential direction (U) of the first region (18), wherein, in the collecting region (22), there is provided for the oil at least one accelerating device (28) which is fixedly connected to the first region (18) and by means of which the oil present in the collecting region (22) is, when the first region (18) rotates, accelerated in the circumferential direction of the collecting region (22) and the oil is caused to perform a substantially radial flow in the direction of a radially outer region (29) of the collecting region (22), wherein the collecting region (22), in its radially outer region (29), has at least one outlet opening (43) for the oil, and **characterized in that** a region (48) of the transmission (5) is provided downstream of the outlet opening (43) and is additionally, for the supply of oil thereof, placed in operative connection, or is in operative connection, with a main oil supply circuit (49) of a jet engine (1).

2. Transmission according to Claim 1, **characterized in that** the accelerating device (28) has at least one wall-like element (30; 30A, 30B) which extends in the radial direction (R) and in an axial direction (A) in the collecting region (22) and which divides the interior space of the collecting region (22), which interior space is formed by walls (33, 34) which delimit the collecting region (22), in the circumferential direction (U) in collecting portions (31) which extend at least partially in the circumferential direction (U).

3. Transmission according to Claim 2, **characterized in that** the wall-like element (30) extends in the radial direction (R) of the first region (18) over the entire radial height (H) of the collecting region (22).

4. Transmission according to Claim 2, **characterized in that** the wall-like element (30) extends in the radial direction (R) of the first region (18) only over a part of the radial height (H) of the collecting region (22).

5. Transmission according to any of Claims 2 to 4, **characterized in that** the wall-like element (30) extends in the axial direction (A) over the entire axial width (B) of the collecting region (22).

6. Transmission according to any of Claims 2 to 4, **characterized in that** the wall-like element (30) extends in the axial direction (A) only over a part of the axial width (B) of the collecting region (22).

7. Transmission according to any of Claims 2 to 6, **characterized in that** the wall-like element (30) is formed with at least one cutout which connects, in the circumferential direction (U), the collecting portions (31) which extend in the circumferential direction (U).

8. Transmission according to any of Claims 2 to 7, **characterized in that** the wall-like element (30) is of planar design and encloses in each case an acute angle (a) with the radially outer region (29) and with the radially inner region (20) of the collecting region (22).

9. Transmission according to any of Claims 2 to 8, **characterized in that** the wall-like element (30) is formed, in the radial direction of the collecting region (22), with a concave or with a convex curvature.

10. Transmission according to any of Claims 1 to 9, **characterized in that** the accelerating device (28) comprises a porous material arranged in the collecting region (22) of the first region (18), preferably an open-celled, foam-like porous material, in the region of which the oil introduced into the collecting region (22) is caused, in the collecting region (22), to perform the substantially radial flow in the direction of the radially outer region (29) of the collecting region (22).

11. Transmission according to any of Claims 1 to 10, **characterized in that** the accelerating device (28) is formed with at least one oil filter.

12. Transmission according to any of Claims 1 to 11, **characterized in that** the collecting region (22) is designed as an encircling groove, the groove base of which forms the radially outer region (29) of the collecting region and the open side of which forms the opening (21) of the radially inner region (20) of the first region (18).

13. Transmission according to any of Claims 1 to 12, **characterized in that** the transmission (5) is designed as a planetary transmission (5).

14. Transmission according to Claim 13, **characterized in that** the first region (18) is provided in the region of a rotating shaft, preferably in the region of a sun gear (25), of a planet carrier (24), of a planet gear (26) and/or of an internal gear (23).

## Revendications

1. Engrenage (5) comprenant un système de distribution d'huile (17) avec au moins une première région réalisée sous forme rotative (18) et une deuxième région (19), la première région (18) étant réalisée dans sa région radialement intérieure (20) au moins en partie avec au moins une ouverture (21) par le biais de laquelle de l'huile est introduite pendant le fonctionnement hors de la deuxième région (19) sans contact dans la première région (18),
la première région (18) comprenant, par rapport à la deuxième région (19), en aval de l'ouverture (21), une région de collecte (22) s'étendant dans la direction radiale et dans la direction périphérique (U) de la première région (18), au moins un dispositif d'accélération (28) pour l'huile, connecté fixement à la première région (18), étant prévu dans la région de collecte (22), au moyen duquel l'huile présente dans la région de collecte (22) est accélérée dans la direction périphérique de la région de collecte (22) lors de la rotation de la première région (18) et l'huile acquérant un écoulement essentiellement radial dans la direction d'une région radialement extérieure (29) de la région de collecte (22),
la région de collecte (22) présentant, dans sa région radialement extérieure (29), au moins une ouverture de sortie (43) pour l'huile,
et **caractérisé en ce**
**qu'**une région (48) de l'engrenage (5), prévue en aval de l'ouverture de sortie (43), est en liaison fonctionnelle ou est amenée en liaison fonctionnelle en vue de son alimentation en huile en outre avec un circuit principal d'alimentation en huile (49) d'un réacteur (1).

2. Engrenage selon la revendication 1, **caractérisé en ce que** le dispositif d'accélération (28) présente au moins un élément de type paroi (30 ; 30A, 30B) s'étendant dans la direction radiale (R) et dans la direction axiale (A) dans la région de collecte (22), lequel divise l'espace intérieur de la région de collecte (22), formé par des parois (33, 34) limitant la région de collecte (22), dans la direction périphérique (U) des portions de collecte (31) s'étendant au moins en partie dans la direction périphérique (U).

3. Engrenage selon la revendication 2, **caractérisé en ce que** l'élément de type paroi (30) s'étend dans la direction radiale (R) de la première région (18) sur toute la hauteur radiale (H) de la région de collecte (22).

4. Engrenage selon la revendication 2, **caractérisé en ce que** l'élément de type paroi (30) s'étend dans la direction radiale (R) de la première région (18) seulement sur une partie de la hauteur radiale (H) de la région de collecte (22).

5. Engrenage selon l'une quelconque des revendications 2 à 4, **caractérisé en ce que** l'élément de type paroi (30) s'étend dans la direction axiale (A) sur toute la largeur axiale (B) de la région de collecte (22).

6. Engrenage selon l'une quelconque des revendications 2 à 4, **caractérisé en ce que** l'élément de type paroi (30) s'étend dans la direction axiale (A) seulement sur une partie de la largeur axiale (B) de la région de collecte (22).

7. Engrenage selon l'une quelconque des revendications 2 à 6, **caractérisé en ce que** l'élément de type paroi (30) est réalisé avec au moins un évidement reliant dans la direction périphérique (U) les portions de collecte (31) s'étendant dans la direction périphérique (U).

8. Engrenage selon l'une quelconque des revendications 2 à 7, **caractérisé en ce que** l'élément de type paroi (30) est réalisé sous forme plane et forme avec la région radialement extérieure (29) et avec la région radialement intérieure (20) de la région de collecte (22) à chaque fois un angle aigu (a).

9. Engrenage selon l'une quelconque des revendications 2 à 8, **caractérisé en ce que** l'élément de type paroi (30) est réalisé dans la direction radiale de la région de collecte (22) avec une courbure concave ou convexe.

10. Engrenage selon l'une quelconque des revendications 1 à 9, **caractérisé en ce que** le dispositif d'accélération (28) comprend un matériau poreux disposé dans la région de collecte (22) de la première région (18), de préférence un matériau poreux de type mousse à cellules ouvertes, dans la région duquel l'huile introduite dans la région de collecte (22) acquiert dans la région de collecte (22) l'écoulement essentiellement radial dans la direction de la région radialement extérieure (29) de la région de collecte (22).

11. Engrenage selon l'une quelconque des revendications 1 à 10, **caractérisé en ce que** le dispositif d'accélération (28) est réalisé avec au moins un filtre à huile.

12. Engrenage selon l'une quelconque des revendications 1 à 11, **caractérisé en ce que** la région de collecte (22) est réalisée sous forme de rainure périphérique dont le fond de rainure forme la région radialement extérieure (29) de la région de collecte et dont le côté ouvert forme l'ouverture (21) de la région radialement intérieure (20) de la première région (18).

13. Engrenage selon l'une quelconque des revendications 1 à 12, **caractérisé en ce que** l'engrenage (5) est réalisé sous forme d'engrenage planétaire (5).

14. Engrenage selon la revendication 13, **caractérisé en ce que** la première région (18) est prévue dans la région d'un arbre rotatif, de préférence dans la région d'une roue solaire (25), d'un porte-satellites (24), d'un pignon planétaire (26) et/ou d'une couronne dentée (23).
